# EUROPÄISCHE PATENTSCHRIFT

(11) **EP 1 694 959 B1**
(45) Veröffentlichungstag und Bekanntmachung des Hinweises auf die Patenterteilung: **23.04.2008**
(21) Anmeldenummer: 04804620.5
(22) Anmeldetag: 30.11.2004
(51) Int. Cl.: F02N 11/08, B60H 1/32

(54) **VERFAHREN ZUM AUTOMATISIERTEN STARTEN UND STOPPEN EINER BRENNKRAFTMASCHINE**
METHOD FOR THE AUTOMATIC STARTING AND STOPPING OF AN INTERNAL COMBUSTION ENGINE
PROCEDE DE MISE EN MARCHE/ARRET AUTOMATIQUE D'UN MOTEUR A COMBUSTION INTERNE

(30) Priorität: 18.12.2003 DE 10359672
(43) Veröffentlichungstag der Anmeldung: 30.08.2006
(73) Patentinhaber: SIEMENS AKTIENGESELLSCHAFT, 80333 München (DE)
(72) Erfinder: DEIML, Mathias, 93093 Donaustauf (DE); LOHRENZ, Frank, 93138 Lappersdorf (DE); RAMPELTSHAMMER, Martin, 93055 Regensburg (DE)
(86) Internationale Anmeldenummer: PCT/EP2004/053184
(87) Internationale Veröffentlichungsnummer: WO 2005/059354

(56) Entgegenhaltungen:
- DE-A1- 3 228 561
- DE-C1- 10 211 461
- US-B2- 6 644 055
- PATENT ABSTRACTS OF JAPAN Bd. 2000, Nr. 09, 13. Oktober 2000 (2000-10-13) & JP 2000 179374 A (TOYOTA MOTOR CORP), 27. Juni 2000 (2000-06-27) -& DATABASE WPI Section PQ, Week 200042 Derwent Publications Ltd., London, GB; Class Q12, AN 2000-479096 XP002323568 & JP 2000 179374 A (TOYOTA JIDOSHA KK) 27. Juni 2000 (2000-06-27)

## Beschreibung

Die Erfindung betrifft ein Verfahren zum automatisierten Starten und Stoppen einer Brennkraftmaschine eines Kraftfahrzeuges mittels einer Start-Stop-Einrichtung gemäß dem Oberbegriff des Patentanspruches 1.

Ein Verfahren dieser Art ist beispielsweise aus der JP 2000 17 93 74 oder der US 6,644,055 B2 bekannt. Insbesondere bei der DE 102 11 461 C1 wird vorgeschlagen, nach dem Anlassen der Brennkraftmaschine durch einen Fahrer diese automatisch in Abhängigkeit mehrerer Stop-Bedingungen abzuschalten. Eine dieser Stop-Bedingungen ist dabei die Stop-Freigabe eines Klimagerätes, wobei dessen Freigabe wiederum u.a. von einer im Innenraum des Kraftfahrzeuges gemessenen Temperatur abhängt. Die Bedingung für den Wert dieser gemessenen Temperatur ist, dass sie innerhalb eines akzeptablen Toleranzbereiches liegt.

Eine weitere Stop-Bedingung, die als UND-Verknüpfung zu den anderen Stop-Bedingungen vorliegen muss, ist eine variable Verzögerungszeit, die die Freigabe des Stop-Betriebes, d.h. das Abschalten der Brennkraftmaschine, verzögert. Hierdurch soll ein unerwünschtes automatisches Abschalten z. B. bei Rangiermanövern oder bei kurzen Stops zum Abbiegen während Gegenverkehr unterdrückt werden.

Grundsätzlich gibt es bei mit einer Start-Stop-Automatik ausgestatteten Fahrzeugen das Problem, dass bei abgeschalteter Brennkraftmaschine die Klimaanlage nicht betrieben werden kann, da dann der Klimakompressor im Nebenaggregateantrieb nicht mitläuft. Als Lösung dieses Problems könnte beim Vorliegen einer Klimatisierungsanforderung die Brennkraftmaschine grundsätzlich nicht abgeschaltet werden, was jedoch Verbrauchsnachteile hat. Ebenso wäre es möglich, den Klimakompressor aus dem üblichen Nebenaggregateantrieb herauszulösen und separat elektrisch anzutreiben, was jedoch kostenintensiv ist und das elektrische Bordnetz überfordern kann. Der elektrische Antrieb könnte dabei auch ein Starter-Generator sein, der über einen Riemen die Nebenaggregate antreibt, wobei dann eine Schaltkupplung zwischen Kurbelwelle und Nebenaggregateantrieb nötig wäre.

Vor diesem Hintergrund liegt der Erfindung daher die Aufgabe zugrunde, ein Verfahren anzugeben, welches eine verbrauchsgünstige Betriebsweise für den Start-Stop-Betrieb einer Brennkraftmaschine bei erhöhtem Komfort für den Fahrer gewährleistet.

Die Lösung dieser Aufgabe ergibt sich aus den Merkmalen des Patentanspruches 1, während vorteilhafte Ausgestaltungen und Weiterbildungen der Erfindung in den abhängigen Ansprüchen angegeben sind.

Demgemäss betrifft die Erfindung ein Verfahren zum automatisierten Starten und Stoppen einer Brennkraftmaschine eines Kraftfahrzeuges mittels einer Start-Stop-Einrichtung, durch welche die Brennkraftmaschine nach deren Anlassen durch einen Fahrer automatisch in Abhängigkeit von mehreren Stop-Bedingungen abgeschaltet wird, wobei eine der Stop-Bedingungen die Stop-Freigabe eines Klimagerätes einer Klimatisiereinrichtung u.a. in Abhängigkeit von einer im Innenraum des Kraftfahrzeuges vorliegenden Temperatur ist, und eine weitere Stop-Bedingung das Verstreichen einer bestimmten variablen Zeitspanne ist, wobei diese Zeitspanne von der Temperaturdifferenz zwischen der im Innenraum vorliegenden Temperatur und der vom Fahrer gewünschten Soll-Temperatur abhängt.

Ein weiteres Merkmal der Erfindung ist dadurch gekennzeichnet, dass die Zeitspanne von der Klimaleistung der Klimatisiereinrichtung abhängt, also z. B. von der Kühlleistung des Klimakompressors.

Zudem ist es vorteilhaft, wenn diese Zeitspanne von der relativen Klimaleistung abhängt, wobei diese relative Klimaleistung der Quotient aus der Klimaleistung des Klimagerätes und der Temperaturdifferenz ist.

In einer anderen Ausgestaltung der Erfindung kann vorgesehen sein, dass das Ende der genannten Zeitspanne von einem Grundwert eines Schwellwertes abhängt, wobei dieser Grundwert aus einem Kennfeld in Abhängigkeit von der relativen Klimaleistung ausgelesen wird. Unter einem Kennfeld wird in diesem Zusammenhang gegebenenfalls auch nur ein einziger Kurvenzug verstanden, der den Verlauf einer Größe in Abhängigkeit einer anderen Größe wiedergibt.

Ein weiteres Merkmal der Erfindung ist dadurch gekennzeichnet, dass der Schwellwert aus einer Verknüpfung des Grundwertes mit einem Lernfaktor berechnet wird, wobei der Lernfaktor eine fahrerindividuelle Fahrweise repräsentiert.

Darüber hinaus ist es vorteilhaft, wenn bei einer Klimaanforderung des Fahrers und gestoppter Brennkraftmaschine durch diese Klimaanforderung ein einen Startzeitpunkt der Zeitspanne setzender Timer gestartet wird, und das Ende der Zeitspanne durch einen Vergleich des aktuellen Wertes des Timers mit dem Schwellwert bestimmt wird, dessen Wert von der Temperaturdifferenz abhängig ist. Dabei kann vorgesehen sein, dass durch das Starten des Timers ein logischer Merker gesetzt wird.

Zudem ist es Bestandteil der Erfindung, dass bei einer Klimaanforderung des Fahrers und laufender Brennkraftmaschine der Wert des Timers inkrementell mit dem Schwellwert verglichen wird, und beim Überschreiten des Schwellwertes durch den aktuellen Wert des Timers die Freigabe des Stop-Betriebes des Klimagerätes erfolgt.

Durch die Nutzung des erfindungsgemäßen Verfahrens wird vorteilhafterweise vollständig auf zusätzliche mechanische Komponenten zur Lösung des aufgezeigten Problems verzichtet. Die vorgesehenen Abläufe sehen vielmehr eine Modellierung des Betriebsverhaltens der Klimatisiereinrichtung und der im Innenraum des Fahrzeugs gemessenen und/oder berechneten Temperatur vor.

Der erfindungsgemäße Verfahrensablauf stellt dazu fest, ob zu dem vom Fahrer gewünschten Zeitpunkt ein Stoppen der Brennkraftmaschine unter klimatischen Gesichtspunkten möglich ist. Nur wenn eine zu große Differenztemperatur vorliegt, wird eine Stop-Freigabe nicht erteilt, vielmehr läuft die Brennkraftmaschine dann eine bestimmte Zeitspanne weiter, bis diese Temperaturdifferenz einen Wert erreicht hat, der ein komfortables Innenraumgefühl für den Fahrer gewährleistet.

Das vorgeschlagene Verfahren gestattet in analoger Weise die Steuerung eines klimabezogenen Wiederstarts der Brennkraftmaschine.

Das erfindungsgemäße Verfahren nutzt wenigstens eine Innenraumtemperatur T_ist, die gemessen oder nach einem Temperaturmodell berechnet wird.

Zur Berechnung der Innenraumtemperatur T_ist wird vorzugsweise ein physikalisch-mathematisches Temperaturmodell des Fahrzeuginnenraumes genutzt, welches eine Mehrzahl von Größen berücksichtigt, die den Zustrom sowie den Abfluss von Wärmeenergie in den Fahrzeuginnenraum bei unterschiedlichen Betriebsbedingungen des Fahrzeuges repräsentieren.

Zu den von dem Temperaturmodell berücksichtigten Größen gehören beispielsweise die Geometrie und die Größe des Fahrzeuginnenraumes, dessen Wärmeisolationseigenschaften, die Größe der Fensterflächen, die Anzahl und die elektrische Leistung von im Fahrzeuginnenraum befindlichen eingeschalteten elektrischen Verbrauchern, der Wärmeeintrag durch Sonneneinstrahlung sowie der Wärmeeintrag durch eine Innenraumheiz- und Belüftungseinrichtung.

Schließlich kann vorgesehen sein, dass mehrere innenraumzonenbezogene Soll-Temperaturen (T_soll) und Innenraumtemperaturen (T_ist) bei der Verfahrensdurchführung ermittelt beziehungsweise berücksichtigt werden.

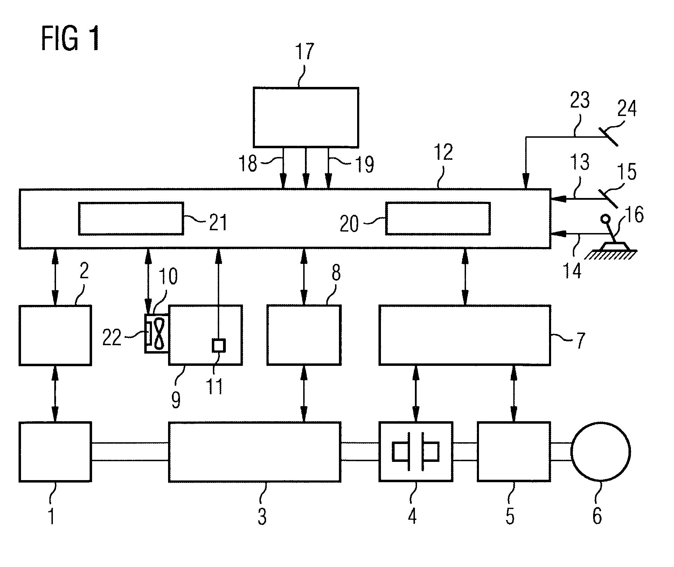

Zur Verdeutlichung der Erfindung ist der Beschreibung eine Zeichnung beigefügt, anhand derer ein Ausführungsbeispiel mit weiteren Merkmalen und Vorteilen nachfolgend näher erläutert wird. Darin zeigt
- Fig. 1: eine schematische Systemübersicht der Erfindung,
- Fig. 2: das Ablaufdiagramm eines Programms, das in der Systemübersicht gemäß Figur 1 abgearbeitet ist, und
- Fig. 3: das Ablaufdiagramm eines weiteren Programms, welches einen Wert bestimmt, der in dem Programm gemäss Figur 2 verarbeitet wird.

Ein Antriebsstrang eines Kraftfahrzeuges weist eine Brennkraftmaschine 1 auf, welcher ein elektronisches Motorsteuergerät 2 zugeordnet ist. Die Kurbelwelle der Brennkraftmaschine 1 ist entweder direkt oder über einen Riemen mit einem Startergenerator 3 verbunden, und steht zudem über eine Kupplung 4 mit einem Getriebe 5 in Verbindung, welches auf Räder 6 des Kraftfahrzeuges wirkt.

Die Kupplung 4 kann eine Reibkupplung oder eine Wandlerüberbrückungskupplung sein. Der Kupplung 4 und dem Getriebe 5 sind ein gemeinsames Steuergerät 7, dem Startergenerator 3 ein Steuergerät 8 zugeordnet.

Einem Innenraum 9 des Kraftfahrzeuges ist eine Klimatisiereinrichtung 10 zugeordnet, die u.a. ein Klimagerät 22 und ein Gebläse umfasst. In dem Innenraum 9 erfasst ein Temperatursensor 11 die aktuell im Innenraum 9 herrschende Temperatur T_ist.

Ein systemübergreifendes Antriebsstrangmanagement 12 verarbeitet eine Vielzahl von eingehenden Informationen und gibt ebenfalls eine Vielzahl von Signalen und/oder Informationen an verschiedene Komponenten weiter. So empfängt es über Leitungen 13, 14 und 23 Sensorsignale, die den Fahrerwunsch bezüglich der Betätigung eines Gaspedals 15, eines Getriebewählhebels 16 sowie eines Bremspedals 24 übertragen. Weitere Signale werden dem Antriebsstrangmanagement 12 von symbolisch zu einem Block 17 zusammengefassten Sensoren oder Stelleinrichtungen zugeführt. Dabei wird zum Beispiel über eine Leitung 18 ein Signal übertragen, welches den von dem Fahrer vorgenommenen Ausschalt- oder Einschaltwunsch bezüglich der Klimatisiereinrichtung 10 überträgt. Eine weitere Leitung 19 überträgt den vom Fahrer individuell über ein entsprechendes Bedienfeld eingegebenen Temperatur-Sollwert T_soll für den Innenraum 9.

Die Steuergeräte 2, 7 und 8 können miteinander vereinigt sein und/oder integraler Bestandteil des Antriebsstrangmanagements 12 sein; ebenso kann dieses auf die Steuergräte 2, 7 und 8 aufgeteilt sein.

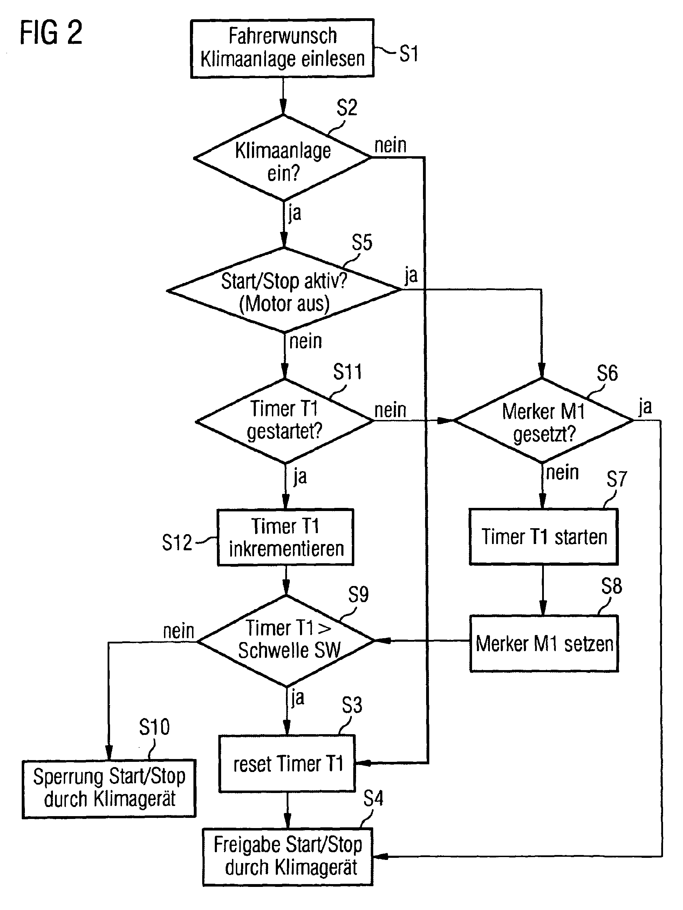

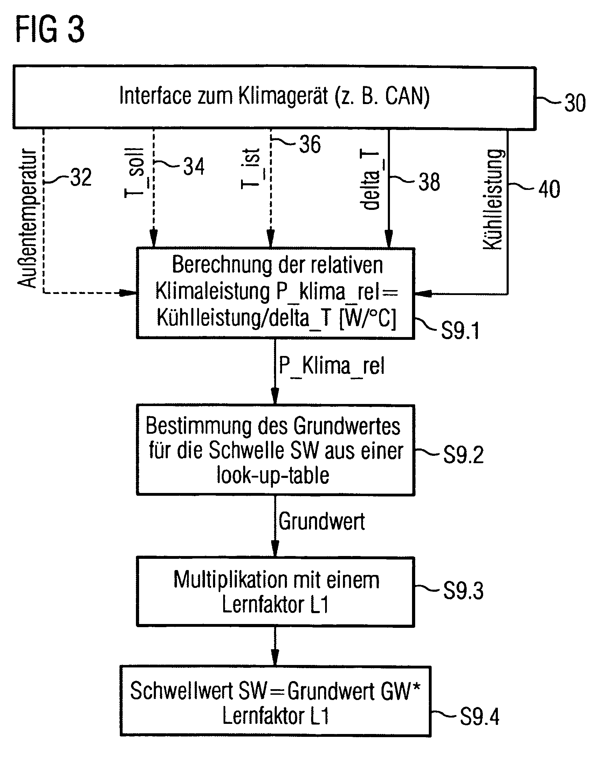

Teil des Antriebsstrangmanagements 12 ist eine Start-Stop-Einrichtung 20 und eine Auswerteschaltung 21. Innerhalb der Start-Stop-Einrichtung 20 wird unter anderem ein Programm abgearbeitet, welches in Verbindung mit Figur 2 näher erläutert wird. Die Auswerteschaltung 21 beinhaltet ein Programm, welches im Zusammenhang mit Figur 3 näher erläutert wird.

Das Antriebsstrangmanagement 12 sorgt dafür, dass in Abhängigkeit bestimmter Bedingungen die Brennkraftmaschine 1 in automatisierter Weise gestoppt oder gestartet wird, ohne dass hierfür die das Fahrzeug führende Person gesondert eingreifen muss. Eine der Bedingungen, die einzuhalten ist, damit die Start-Stop-Einrichtung 20 des Antriebsstrangmanagements 12 das Stoppen zulässt, ist die Freigabe dieses Start-Stop-Betriebes durch die Klimatisiereinrichtung 10.

Das hierbei ablaufende Programm wird nun anhand des Ablaufdiagramms in Figur 2 erläutert.

In einem Schritt S1 wird der Fahrerwunsch bezüglich des Einschaltens der Klimatisiereinrichtung 10 eingelesen, welcher über die Leitung 18 übertragen wird. In einem Schritt S2 wird für den Fall, dass ein Klimabetrieb nicht gewünscht ist, über den Ausgang "nein" ein später noch zu erläuternder rücksetzbarer Zeitzähler (Timer T1) in einem Schritt S3 zurückgesetzt. Zudem erfolgt die sofortige Freigabe des Start-Stop-Betriebes für die Brennkraftmaschine 1 in einem Schritt S4, sofern auch die anderen, hier nicht näher zu erläuternden Bedingungen hierfür erfüllt sind.

Wird im Schritt S2 ein Klimabetrieb gewünscht (Ausgang "ja"), so wird in einem Schritt S5 festgestellt, ob die Start-Stop-Einrichtung 20 aktuell aktiv ist, also die Brennkraftmaschine 1 ausgeschaltet ist. Ist dies der Fall (Ausgang "ja"), so erfolgt in einem Schritt S6 eine Abfrage, ob ein Merker M1 bereits gesetzt wurde. Ist dies nicht der Fall (Ausgang "nein"), so wird im Schritt S7 der Timer T1 gestartet und in einem Schritt S8 der Merker M1 gesetzt.

Der Timer T1 gibt die Zeit seit dem letzten Aktivierungsereignis wieder, also seit dem Einschalten der Klimatisiereinrichtung 10 durch den Fahrer oder einen Start der Brennkraftmaschine 1. Der Startzeitpunkt des Timers T1 definiert dabei einen Anfangszeitpunkt eines Zeitfensters delta_t, welches so lange geöffnet ist, bis der Timer T1 gestoppt wird.

Der Merker M1 ist eine logische Zustandsvariable, welche bei einem Ausschalten der Klimatisiereinrichtung 10 durch den Fahrer oder bei einem Start der Brennkraftmaschine 1 zurückgesetzt wird.

War in Schritt S6 der Merker M1 bereits gesetzt, d.h. Ausgang "ja" aus Schritt S6, so wird die Freigabe des Start-Stop-Betriebs durch die Klimatisiereinrichtung 10 im Schritt S4 erteilt.

Wurde in dem Schritt S8 der Merker M1 gesetzt, so wird in einem Schritt S9 der aktuelle Wert des Timers T1 mit einem Schwellwert SW verglichen.

Die Ermittlung dieses Schwellwertes SW wird im Zusammenhang mit Figur 2 später näher erläutert.

Liegt in Schritt S9 der Wert von T1 oberhalb des Schwellwertes SW (Ausgang "ja"), so wird in dem Schritt S3 der Timer T1 zurück auf den Wert Null gesetzt und im Schritt S4 die Freigabe erteilt. Liegt er unterhalb des Schwellwertes SW, Ausgang "nein" aus Schritt S9, so wird der Start-Stop-Betrieb in einem Schritt S10 gesperrt.

Für den Fall, dass die Start-Stop-Einrichtung 20 aktuell nicht aktiv ist, also die Brennkraftmaschine 1 in Betrieb ist, wird über den Ausgang "nein" aus Schritt S5 in Schritt S11 abgefragt, ob der Timer T1 bereits gestartet ist. Ist dies nicht der Fall (Ausgang "nein"), so erfolgt die weitere Abarbeitung des Programms anhand der bereits erläuterten Schritte S6, S7, S8 und S9.

Sollte der Timer T1 bereits gestartet sein, Ausgang "ja" aus Schritt S11, so wird der Wert des Timers T1 in einem Schritt S12 inkrementiert und jedes Inkrement wird anschließend in dem bereits erläuterten Schritt S9 mit dem Schwellwert SW verglichen.

Das zuvor beschriebene Verfahren wird z. B. in einem Zeittakt von 10 Millisekunden durchlaufen und die hierdurch über den Schritt S4 oder S10 ausgegebene logische Freigabevariable wird dem Antriebsstrangmanagement 12 übergeben.

Nachfolgend wird die Ermittlung des Schwellwertes SW anhand der Figur 3 näher erläutert.

Die Klimatisiereinrichtung 10 stellt über ein Interface 30 eines CAN-Busses verschiedene Informationen zur Verfügung. So werden über Pfade 32, 34, 36, 38 und 40 der Wert der aktuell über einen nicht gezeigten Sensor erfassten Außentemperatur, der vom Fahrer über ein Bedienfeld im Innenraum 9 eingegebene Temperatur-Sollwert T_soll für den Innenraum des Fahrzeuges, der über den Sensor 11 ermittelte aktuelle Temperatur-Istwert T_ist im Innenraum 9, die Differenz delta_T dieser beiden genannten Temperaturwerte (T_soll abzüglich T_ist), sowie die eingeregelte Leistung der Klimatisiereinrichtung 10, d.h. die Kühl- oder Heizleistung, einem Schritt S9.1 übergeben.

In diesem Schritt S9.1 wird anhand der vorliegenden Informationen eine relative Klimaleistung P_klima_rel als Quotient aus dem Wert der Kühlleistung in Watt und der Temperaturdifferenz delta_T in Grad Celsius errechnet. Der Wert dieser relativen Kühlleistung P_klima_rel wird in einem Schritt S9.2 einem Kennfeld zugeführt, welches in Abhängigkeit dieses Wertes Grundwerte GW in Sekunden ausliest. Beispielhaft sind in der nachfolgenden Tabelle einige typische Wertepaare aus diesem Kennfeld, welches aus einer sogenannten look-up-table bestehen kann, angegeben:

| P_klima_rel | Grundwert GW |
|---|---|
| (Watt/Grad Celsius) | (Sekunden) |
| - 500 | 120 |
| - 200 | 60 |
| - 100 | 30 |
| 0 | 0 |
| 100 | 30 |
| 200 | 60 |
| 500 | 120 |

Dieser Grundwert GW wird anschließend in einem Schritt S9.3 multiplikativ mit einem Lernfaktor L1 verknüpft. Dieser Lernfaktor L1 kann Werte zwischen Null und Eins annehmen und ermöglicht eine Anpassung des Fahrzeugverhaltens an individuelle Fahrerwünsche und -fahrweisen.

Letztendlich wird in einem Schritt S9.4 der Schwellwert SW als mathematisches Produkt aus dem Grundwert GW und dem Lernfaktor L1 ausgegeben und dem anhand von Figur 2 erläuterten Schritt S9 übergeben.

## Patentansprüche

1. Verfahren zum automatisierten Starten und Stoppen einer Brennkraftmaschine (1) eines Kraftfahrzeuges mittels einer Start-Stop-Einrichtung (20), durch welche die Brennkraftmaschine (1) nach deren Anlassen durch eine Person automatisch in Abhängigkeit von mehreren Stop-Bedingungen abgeschaltet wird, wobei eine der Stop-Bedingungen die Stop-Freigabe einer Klimatisiereinrichtung (10) unter anderem in Abhängigkeit von einer im Innenraum (9) des Kraftfahrzeuges vorliegenden Temperatur (T_ist) ist, und eine weitere Stop-Bedingung das Verstreichen einer bestimmten, variablen Zeitspanne ist, und wobei
die Zeitspanne (delta_t) von der Temperaturdifferenz (delta_T) zwischen der im Innenraum (9) vorliegenden Temperatur (T_ist) und der vom Fahrer gewünschten Soll-Temperatur (T_soll) abhängt,
**dadurch gekennzeichnet, dass**
dass die Zeitspanne (delta t) von einer relativen Klimaleistung (P klima rel) abhängt, wobei diese relative Klimaleistung (P klima rel) der Quotient aus der Klimaleistung der Klimatisiereinrichtung (10) und der Temperaturdifferenz (delta T) ist.

2. Verfahren nach Anspruch 1, **dadurch gekennzeichnet, dass** die Zeitspanne (delta_t) von der Klimaleistung der Klimatisiereinrichtung (10) abhängt.

3. Verfahren nach einem der vorhergehenden Ansprüche, **dadurch gekennzeichnet, dass** das Ende der Zeitspanne (delta_t) von einem Grundwert (GW) eines Schwellwertes (SW) abhängt, wobei dieser Grundwert (GW) aus einem Kennfeld in Abhängigkeit von der relativen Klimaleistung (P_klima_rel) ausgelesen wird.

4. Verfahren nach Anspruch 3, **dadurch gekennzeichnet, dass** der Schwellwert (SW) aus einer Verknüpfung des Grundwertes (GW) mit einem Lernfaktor (L1) berechnet wird, wobei der Lernfaktor (L1) eine fahrerindividuelle Fahrweise repräsentiert.

5. Verfahren nach einem der Ansprüche 3 oder 4,
**dadurch gekennzeichnet, dass** bei einer Klimaanforderung des Fahrers und gestoppter Brennkraftmaschine (1) durch diese Klimaanforderung ein einen Startzeitpunkt der Zeitspanne (delta_t) setzender Timer (T1) gestartet wird, und das Ende der Zeitspanne (delta_t) durch einen Vergleich des aktuellen Wertes des Timers (T1) mit dem Schwellwert (SW) bestimmt wird, dessen Wert von der Temperaturdifferenz (delta_T) abhängig ist.

6. Verfahren nach Anspruch 5, **dadurch gekennzeichnet, dass** durch das Starten des Timers (T1) ein logischer Merker (M1) gesetzt wird.

7. Verfahren nach Anspruch 6, **dadurch gekennzeichnet, dass** bei einer Klimaanforderung des Fahrers und laufender Brennkraftmaschine (1) der Wert des Timers (T1) inkrementell mit dem Schwellwert (SW) verglichen wird, und bei Überschreiten des Schwellwertes (SW) durch den aktuellen Wert des Timers (T1) die Freigabe des Stop-Betriebes der Klimatisiereinrichtung (10) erfolgt.

8. Verfahren nach einem der vorherigen Ansprüche, **dadurch gekennzeichnet, dass** die Innenraumtemperatur (T_ist) gemessen oder nach einem Temperaturmodell berechnet wird.

9. Verfahren nach Anspruch 8, **dadurch gekennzeichnet, dass** zur Berechnung der Innenraumtemperatur (T_ist) ein physikalisch-mathematisches Temperaturmodell des Fahrzeuginnenraumes genutzt wird, welches eine Mehrzahl von Größen berücksichtigt, die den Zustrom sowie den Abfluss von Wärmeenergie bei unterschiedlichen Betriebsbedingungen des Fahrzeuges repräsentieren.

10. Verfahren nach Anspruch 9, **dadurch gekennzeichnet, dass** zu den Größen des Temperaturmodells die Geometrie und die Größe des Fahrzeuginnenraumes, dessen Wärmeisolationseigenschaften, die Größe der Fensterflächen, die Anzahl und die elektrische Leistung von im Fahrzeuginnenraum befindlichen eingeschalteten elektrischen Verbrauchern, der Wärmeeintrag durch Sonneneinstrahlung sowie durch eine Innenraumheiz- und Belüftungseinrichtung gehören.

11. Verfahren nach einem der vorherigen Ansprüche, **dadurch gekennzeichnet, dass** mehrere innenraumzonenbezogene Soll-Temperaturen (T_soll) und Innenraumtemperaturen (T_ist) ermittelt und berücksichtigt werden.

12. Verfahren nach einem der vorherigen Ansprüche, **dadurch gekennzeichnet, dass** dieses in analoger Weise einen klimabezogenen Wiederstart der Brennkraftmaschine steuert.

## Claims

1. Method for the automatic starting and stopping of an internal combustion engine (1) of a motor vehicle by means of a start-stop device (20), by means of which the internal combustion engine (1), having been started by a person, is switched off automatically depending on multiple stop conditions, wherein one of the stop conditions is the release of the stop mode of an air-conditioning device (10) depending among other things on a temperature (T_ist) prevailing in the interior (9) of the motor vehicle and a further stop condition is the expiration of a defined variable time period, and wherein the time period (delta_t) depends on the temperature difference (delta_T) between the temperature (T_ist) prevailing in the interior (9) and the target temperature (T_soll) desired by the driver,
**characterized in that**
the time period (delta_t) depends on a relative air-conditioning performance (P_klima_rel), wherein this relative air-conditioning performance (P_klima_rel) is the quotient from the air-conditioning performance (P_klima_rel) of the air-conditioning device (1) and the temperature difference (delta_T).

2. Method according to claim 1, **characterized in that** the time period (delta_t) depends on the air-conditioning performance of the air-conditioning device (10).

3. Method according to one of the preceding claims,
**characterized in that** the end of the time period (delta_t) depends on a basic value (GW) of a threshold value (SW), wherein this basic value (GW) is read out from an engine characteristics map depending on the relative air-conditioning performance (P_klima_rel).

4. Method according to claim 3,
**characterized in that** the threshold value (SW) is calculated from a link between the basic value (GW) and a learning factor (L1), wherein the learning factor (L1) represents a driver-specific manner of driving.

5. Method according to one of claims 3 or 4,
**characterized in that**, where an air conditioning request is made by the driver and the internal combustion engine (1) is not running, this air conditioning request starts a timer (T1) that sets a start time of the time period (delta_t), and the end of the time period (delta_t) is determined by a comparison of the current value of the timer (T1) with the threshold value (SW), whose value is dependent on the temperature difference (delta_T).

6. Method according to claim 5,
**characterized in that** the starting of the timer (T1) sets a logic marker (M1).

7. Method according to claim 6,
**characterized in that**, where an air conditioning request is made by the driver and the internal combustion engine (1) is running, the value of the timer (T1) is compared incrementally with the threshold value (SW), and where the threshold value (SW) is exceeded by the current value of the timer (T1), release of the stop mode of the air-conditioning device is enabled.

8. Method according to one of the preceding claims,
**characterized in that** the temperature (T_ist) of the interior is measured or calculated according to a temperature model.

9. Method according to claim 8,
**characterized in that** a physical/mathematical temperature model of the vehicle interior is used to calculate the interior temperature (T_ist), said model taking into account a plurality of variables which represent the inflow and the outflow of heat energy under different operating conditions of the vehicle.

10. Method according to claim 9,
**characterized in that** the variables of the temperature model include the geometry and the size of the vehicle interior, its thermal insulation properties, the surface area of the windows, the number and electrical output of activated electrical consumers located in the vehicle interior and the input of heat through solar irradiation and through an interior heating and ventilation device.

11. Method according to one of the preceding claims,
**characterized in that** multiple interior-zone-related target temperatures (T_soll) and interior temperatures (T_ist) are determined and taken into account.

12. Method according to one of the preceding claims,
**characterized in that** this method controls in an analogous manner an air-conditioning-related restart of the internal combustion engine.

## Revendications

1. Procédé pour le démarrage et la mise à l'arrêt automatiques d'un moteur à combustion interne (1) d'un véhicule automobile au moyen d'un dispositif de démarrage et d'arrêt (20) par lequel le moteur à combustion interne (1) est automatiquement arrêté en fonction de plusieurs conditions d'arrêt après son démarrage par une personne, l'une des dites conditions d'arrêt étant l'autorisation d'arrêt d'une installation de climatisation (10), notamment en fonction d'une température (T_ist) présentée dans l'habitacle (9) du véhicule automobile, et une autre condition d'arrêt étant l'écoulement d'un intervalle temporel variable défini, et l'intervalle temporel (delta_t) étant fonction du différentiel de température (delta_T) entre la température (T_ist) présentée dans l'habitacle (9) et la température de consigne (T_soll) souhaitée par le conducteur,
**caractérisé en ce que**
l'intervalle temporel (delta_t) est fonction d'une puissance de climatisation relative (P_klima_rel), ladite puissance de climatisation relative (P_klima_rel) étant le quotient de la puissance de climatisation de l'installation (10) par le différentiel de température (delta_T).

2. Procédé selon la revendication 1, **caractérisé en ce que** l'intervalle temporel (delta_t) est fonction de la puissance de climatisation de l'installation de climatisation (10).

3. Procédé selon l'une des revendications précédentes, **caractérisé en ce que** la fin de l'intervalle temporel (delta_t) est fonction d'une valeur de base (GW) d'une valeur seuil (SW), ladite valeur de base (GW) étant extraite d'un diagramme caractéristique en fonction de la puissance de climatisation relative (P_klima_rel).

4. Procédé selon la revendication 3, **caractérisé en ce que** la valeur seuil (SW) est calculée à partir d'une combinaison entre la valeur de base (GW) et un facteur d'apprentissage (L1), le facteur d'apprentissage (L1) représentant un type de conduite spécifique au conducteur.

5. Procédé selon l'une des revendications 3 et 4, **caractérisé en ce que** lors d'une demande de climatisation du conducteur, le moteur à combustion interne (1) étant arrêté, une minuterie (T1) fixant un moment de départ de l'intervalle temporel (delta_t) est démarrée par ladite demande de climatisation, et **en ce que** la fin de l'intervalle temporel (delta_t) est déterminée par une comparaison entre la valeur actuelle de la minuterie (T1) et la valeur seuil (SW), dont la valeur est fonction du différentiel de température (delta_T).

6. Procédé selon la revendication 5, **caractérisé en ce qu'**un pointeur logique (M1) est fixé par le démarrage de la minuterie (T1).

7. Procédé selon la revendication 6, **caractérisé en ce que** lors d'une demande de climatisation du conducteur, le moteur à combustion interne (1) étant en marche, la valeur de la minuterie (T1) est incrémentalement comparée à la valeur seuil (SW), et **en ce qu'**en cas de dépassement de la valeur seuil (SW) par la valeur actuelle de la minuterie (T1), l'autorisation de mise à l'arrêt de l'installation de climatisation (10) est émise.

8. Procédé selon l'une des revendications précédentes, **caractérisé en ce que** la température d'habitacle (T_ist) est mesurée ou calculée en appliquant un modèle de température.

9. Procédé selon la revendication 8, **caractérisé en ce qu'**un modèle physico-mathématique de température de l'habitacle est utilisé pour le calcul de la température d'habitacle (T_ist), lequel intègre une pluralité de grandeurs représentatives de l'apport et de l'évacuation d'énergie thermique dans différentes conditions de fonctionnement du véhicule.

10. Procédé selon la revendication 9, **caractérisé en ce que** les grandeurs du modèle de température comprennent la géométrie et les dimensions de l'habitacle, les propriétés d'isolation thermique de celui-ci, les surfaces des fenêtres, le nombre et la puissance électrique des récepteurs électriques disposés dans l'habitacle, l'apport de chaleur par le rayonnement solaire ainsi que par une installation de chauffage et de ventilation de l'habitacle.

11. Procédé selon l'une des revendications précédentes, **caractérisé en ce que** plusieurs températures de consigne (T_soll) relatives à des zones de l'habitacle et températures d'habitacle (T_ist) sont déterminées et prises en compte.

12. Procédé selon l'une des revendications précédentes, **caractérisé en ce que** celui-ci commande de manière analogue un redémarrage du moteur à combustion interne en fonction de la climatisation.
